# EUROPEAN PATENT SPECIFICATION

(11) **EP 2 720 983 B1**
(45) Date of publication and mention of the grant of the patent: **30.05.2018**
(21) Application number: 12738202.6
(22) Date of filing: 14.06.2012
(51) Int. Cl.: C02F 1/28

(54) **CARTRIDGE FILTER FOR PERCOLATING FILTER DEVICES**
FILTEREINSATZ FÜR PERKOLATIONSFILTER
FILTRE À CARTOUCHE POUR DISPOSITIFS À FILTRE DE PERCOLATION

(30) Priority: 15.06.2011 IT PD20110200
(43) Date of publication of application: 23.04.2014
(73) Proprietor: Laica S.p.A., 36021 Barbarano Vicentino (VI) (IT)
(72) Inventor: MORETTO, Maurizio, I-36100 Vicenza (IT)
(74) Representative: Locas, Davide
(86) International application number: PCT/IB2012/053001
(87) International publication number: WO 2012/172500

(56) References cited:
- WO-A1-99/41201
- WO-A1-2005/118104
- WO-A2-2008/026208
- DE-U1-202010 006 889

## Description

### Technical field

The invention relates to a replaceable cartridge filter for percolating filter devices of the type including the features mentioned in the preamble to the main claim.

### Background art

A replaceable cartridge filter including the above-mentioned features is known from WO2010/034735. This document describes a filter with a dual outflow aperture which can keep the filter bed moist and, at the same time, regulate the flow of liquid to be filtered without substantially altering its three-dimensional configuration and the production tooling required to produce it in comparison with conventional filters. It is based on the fitting of a cap on the filter casing; with the base of the casing, the cap forms a passage for interconnecting the outflow apertures. In an intermediate position of the passage, there is a discharge aperture with a calibrated hole, which has the flow-regulation function.

However, this configuration of cartridge filter has some disadvantages.

A main disadvantage is due to the fact that the flow is regulated in a position which is spaced from and above the apertures for the outflow from the filter bed. Since the pressures involved, which are due to a few centimetres of hydrostatic head, are minimal, this adversely affects regulation stability both owing to the smaller hydrostatic head and owing to the pressure losses between the outflow apertures and the calibrated hole.

In order partially to overcome this disadvantage, it was selected to fit plugs with calibrated holes in the outflow apertures. This ensures improved regulation stability but leads to an appreciable drop in production as well as a relatively high production cost owing to the need to produce and fit the plugs separately.

The use of calibrated holes is also described in relation to other filter systems such as, for example, that described in international patent application WO 2005/118104.

This document describes in particular a filter jug with a replaceable cartridge in which a calibrated passage is defined between a lower portion of the filter cartridge and the base of a separator element of the jug.

However, in order to achieve correct flow regulation by means of the calibrated passage, it is necessary for the cartridge to be positioned perfectly in its seat, which is defined in the separator element.

In fact, in this solution, the size of the calibrated hole and hence also the regulation effect produced, clearly depend on the relative positions of the cartridge and its seat.

In order to fix the cartridge accurately, the filter system described in WO 2005/118104 provides for the use of a tubular element which is formed in the base of the cartridge and engages in a corresponding hole formed in the base of the separator element.

However, this solution clearly leads to greater constructional complexity of the cartridge and, in addition, does not allow the cartridge also to fit filter systems of different types, in particular those which do not provide a suitable seat for the tubular element.

The problem underlying the present invention is therefore to provide a replaceable cartridge filter which is suitable for the use indicated and which is designed structurally and functionally to overcome all of the disadvantages discussed with reference to the prior art mentioned.

This problem is solved by the invention by means of a cartridge filter formed in accordance with the appended claims.

The characteristics and the advantages of the invention will become clearer from the detailed description of a preferred but not exclusive embodiment thereof which is described by way of non-limiting example with reference to the appended drawings, in which:
Figure 1 is a schematic section through a percolating filter device provided with a filter according to the invention;
Figure 2 is a section taken through a detail of the device of Figure 1, on an enlarged scale; and
Figure 3 is a section taken on the line III-III of Figure 2, on a further enlarged scale.

### Preferred embodiment of the invention

With reference to the drawings mentioned, a replaceable cartridge filter (otherwise referred to in brief as a "cartridge") for a percolating filter device 10 for filtering water for domestic use, is generally indicated 1. Filters of this type are used in drinking-water purification jugs, in coffee makers, in teapots and in kettles.

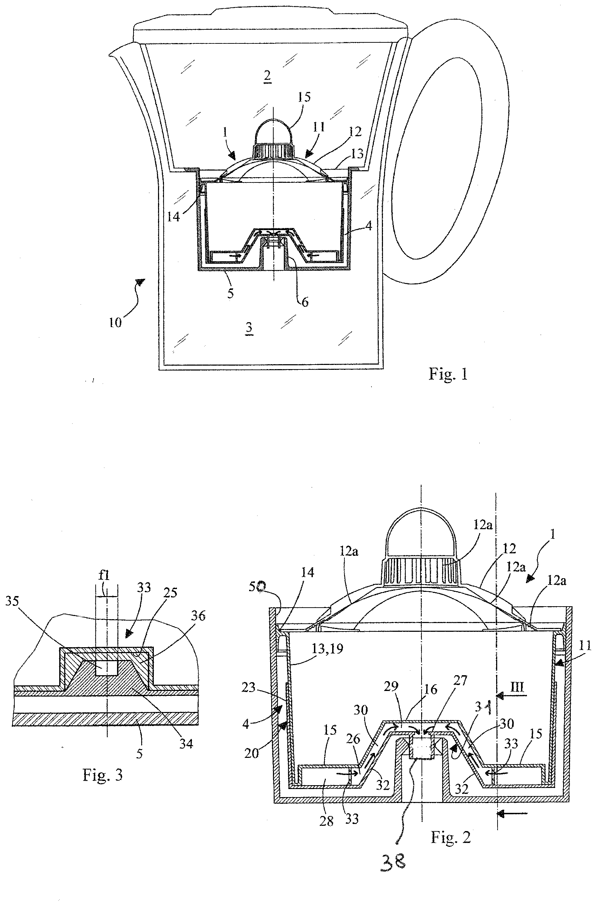

The device illustrated in Figure 1 is of the jug type (but the invention is also equally applicable to devices of the other types given as examples above), with an upper container 2 and a lower container 3 which communicate by gravity through a passage 4 which constitutes a seat for removably housing the cartridge 1.

It is pointed out that, in the context of the present invention, the upper and lower positions can be determined univocally on the basis of the flow of the water during the filtering operation, which falls by gravity from the upper container 2 to reach the lower container 3, passing through the cartridge 1.

As can be seen from Figure 1, the upper container 2 and the passage 4 are defined by a funnel-like vessel generally referred to as a "hopper". The lower container 3 is thus defined once the separator element is fitted in the body of the jug. The cartridge 1 is engaged in a leaktight manner by a lip seal 14, or other equivalent sealing element, thereof in an upper mouth 50 of the passage 4 which defines a corresponding seat in the jug for removably housing the cartridge so that all of the water held in the upper container 2 has to pass through the cartridge 1 in order to flow into the lower container 3. The passage 4 is closed at the bottom by a base wall 5 from which a tubular appendage 6, the function and structure of which will be explained further below, extends upwards.

The cartridge 1 has an elongate shape along a principal longitudinal axis. It comprises a casing 11 in which there is a filter bed, not shown, of conventional composition, such as a mixture of activated carbon granules, ion-exchange resins, salt additives, etc.

The casing 11 comprises an upper portion 12 in which a plurality of inlet apertures 12a are formed for admitting the liquid to be filtered and a lower portion 13 having a base 16 with two (or more) apertures 15 for the outflow of the filtered liquid, arranged in mutually spaced-apart positions and juxtaposed along the longitudinal axis of the cartridge. All of the above-mentioned apertures are protected by screening suitable for retaining the filter material inside the casing 11.

The seal 14 extends around the demarcation line between the upper and lower walls. The casing 11 has a side wall 19 which delimits the lower portion as far as the base 16.

A cap 20 is fitted on the lower portion of the casing 11 to cover at least the base 16 thereof. The cap 20 is restrained on the side wall 19 of the casing 11, with a fluid-tight connection, in the region of a side wall 23 of the cap.

The seal between the respective side walls 19, 23 is achieved by an interference fit between them or by means of a snap fit or even, and preferably, by welding or gluing. When the cap 20 is fitted on the casing 11, the bases 16, 25 of the casing and of the cap, respectively, face one another and the side wall 23 extends as far as an intermediate level of the side wall 19.

More generally, it should be pointed out that the cap 20 extends over the casing 11 as far as a position below the seal 14. This characteristic allows the seal 14 to be used for leak-tight housing in the separator element.

A channel-shaped cavity 25 is formed in the base of the casing 11 and extends between the two outflow apertures 15 so as to delimit, with the flat base of the cap 20, a channel-shaped passage 26 having the function of conveying the fluid discharged from the apertures 15 towards an aperture 27 for the discharge of the filtered liquid from the cartridge 1. Two symmetrical branches are identified in the passage 26, relative to the discharge aperture 27, and each is directed towards the respective outflow aperture 15. Each branch includes a respective first portion 28 which serves to collect the flow discharged from the apertures 15, a second portion 29 which is substantially parallel to the first portion 28 but spaced transversely therefrom and a respective inclined linking portion 30 between the first portion and the second portion. The inclined portions 30 converge towards one another in the direction away from the first portions 28. The base of the cartridge has a central recess 31, the walls 32 of which have a configuration matching that of the inclined portions 30 of the passage 26.

A calibrated constriction 33 is formed in each branch of the passage 26 and serves to limit the flow of filtered liquid in the passage 26 in order to regulate the contact time between the fluid to be filtered and the filter bed.

Each constriction is preferably formed by a localized thickening 34 of the base of the cap which protrudes into the passage 26, obstructing it except for a groove 35 having a predetermined cross-section and length which are selected according to the desired contact time between the filter bed and the fluid to be filtered.

The thickening 34 preferably has a trapezoidal cross-section with the groove 35 formed in the smaller base. A filling 36 shaped to fit the trapezoidal cross-section of the thickening 34 is arranged in the cavity 25, in the region of the localized thickening 34 of the cap 20, and has the function of a seal to ensure that the entire flow through the passage 26 is conveyed through the constriction 33. The constriction is preferably provided between the first portion and the inclined portion, immediately downstream of the corresponding outflow apertures 15.

A tube 38 extends the discharge aperture 27 in the direction away from the casing. The tube 38 is positioned so as to extend into the appendage 6 when the cartridge is fitted in its seat in the device 10, performing a dual function. In the first place, it conveys the filtered water through the appendage 6 towards the lower container 3 for receiving the filtered water, limiting any stagnation in the base of the passage 4; in the second place, should the passage 4 be of the type with a valve as described, for example, in WO2009015679, it interacts with any closure members housed in the appendage 6, bringing about opening thereof.

However, in this case, it is clearly not necessary for the tube to act as a locating element for the cartridge, since its presence does not affect the definition of the calibrated constriction.

The invention thus achieves the objective proposed with considerable advantages over previously known cartridge filters, amongst which are considerable stability of the flow regulated by the calibrated constrictions and a good hourly production capacity with a low assembly cost.

In particular, the fact that the cap allows the calibrated constriction not to be arranged above the seal of the cartridge enables effective flow regulation to be achieved irrespective of the positioning of the cartridge in its seat.

## Claims

1. A replaceable cartridge filter (1) for percolating filter devices (10), comprising:
- a casing (11) containing a filter bed, the casing (11) having a base (16) with at least two apertures (15) for the outflow of the filtered liquid, formed in spaced-apart positions in the base (16), and the casing (11) comprising a sealing element (14) suitable for engaging in a corresponding seat (50) of the filter device (10);
- a cap (20) fitted in a leaktight manner on the casing (11) in the region of the base (16) thereof, a fluid passage (26) being defined between the cap (20) and the casing (11) and interconnecting the outflow apertures (15),
- and wherein a discharge aperture (27) for the liquid filtered by the cartridge (1) is formed in the cap (20), in an intermediate position of the passage (26), between the outflow apertures (15), two symmetrical branches being identified in the passage (26), relative to the discharge aperture (27), each of said symmetrical branches being directed towards the respective outflow aperture (15)
- **characterized in that** it comprises, in each branch of the passage (26), between the outflow apertures (15) and the discharge aperture (27), one calibrated constriction (33) for regulating the transit speed of the filtered liquid through the filter bed by limiting the flow of filtered liquid in the passage (26), and **in that** the cap (20) extends over the casing (11) as far as a position below the sealing element (14).

2. A cartridge filter according to Claim 1, comprising a tube (38) extending the outflow aperture (27) in a direction away from the casing (11).

3. A cartridge filter according to Claim 1 or 2, wherein the passage (26) comprises two first, substantially coplanar portions (28) extending towards each other from the corresponding outflow apertures (15), a second portion (29) parallel to the first portions but spaced from them in the transverse direction, and corresponding inclined linking portions (30) between the first portions (28) and the second portion (29), the linking portions (30) converging towards each other in the direction away from the first portions (28).

4. A cartridge filter according to Claim 3, wherein the base (16) of the cap (20) has a central recess (31) whose walls have a configuration matching that of the inclined portions (30) of the passage (26).

5. A cartridge filter according to any one of the preceding claims, wherein the passage (26) is formed by a cavity (25) in the base of the casing (11), sealed by a facing wall (32) of the cap (20).

6. A cartridge filter according to Claim 5, wherein the constriction (33) is formed by a thickening of the wall of the cavity (25) and/or the cap (20).

7. A cartridge filter according to any one of the preceding claims wherein the cap (20) is restrained, with a fluid-tight connection, on a side wall (19) of the casing (11), in the region of a side wall (23) of the cap (20).

8. A cartridge filter according to Claim 7 wherein the side wall (23) extends as far as an intermediate level of the side wall (19).

9. A percolating filter device (10) comprising a separator element suitable for defining an upper container (2) and a lower container (3) in the device and a cartridge filter (1) according to any of claims 1 to 8, the separator element comprising a seat (5) for the removable housing of the cartridge filter (1), the sealing element (14) of the cartridge engaging removably in a corresponding seat (50) formed in the separator element.

10. A filter device (10) according to Claim 9, comprising a jug-like body inside which the separator element is housed removably so as to define the upper container (2) and the lower container (3).

## Patentansprüche

1. Austauschbarer Kartuschenfilter (1) zum Perkulieren von Filtervorrichtungen (10), umfassend:
- ein Gehäuse (11), das ein Filterbett enthält, wobei das Gehäuse (11) eine Basis (16) mit zumindest zwei Öffnungen (15) zum Ausfließen der gefilterten Flüssigkeit aufweist, die in voneinander beabstandeten Positionen in der Basis (16) ausgebildet sind, und das Gehäuse (11) ein Dichtungselement (14) aufweist, dass zum Eingriff in einen korrespondierenden Sitz (50) der Filtervorrichtung (10) passend ist;
- einen Deckel (20), der in einer abgedichteten Weise auf dem Gehäuse (11) im zugehörigen Bereich der Basis (16) angepasst ist, wobei eine Flüssigkeitsleitung (26) zwischen dem Deckel (20) und dem Gehäuse (11) ausgebildet ist und die Ausflussöffnungen (15) verbindet,
- und wobei eine Abgabeöffnung (27) für die gefilterte Flüssigkeit durch die Kartusche (1) im Deckel (20) in einer Zwischenposition der Leitung (26) zwischen den Ausflussöffnungen (15) ausgebildet ist, wobei zwei symmetrische Abzweigungen in der Leitung (26) relativ zur Abgabeöffnung (27) bestimmt sind, wobei jede der symmetrischen Abzweigungen zur jeweiligen Ausflussöffnung (15) ausgerichtet ist,
- **dadurch gekennzeichnet, dass** sie in jeder Abzweigung der Leitung (26) zwischen den Ausflussöffnungen (15) und der Abgabeöffnung (27) eine kalibrierte Verengung (33) zum Regulieren der Durchfuhrgeschwindigkeit der gefilterten Flüssigkeit durch das Filterbett durch Begrenzen des Flusses der gefilterten Flüssigkeit in der Leitung (26) aufweist, und dadurch, dass sich der Deckel (20) über das Gehäuse bis zu einer Position unter dem Dichtungselement (14) erstreckt.

2. Kartuschenfilter gemäß Anspruch 1 mit einem Rohr (38), dass sich in die Ausflussöffnung (27) in eine Richtung weg vom Gehäuse (11) erstreckt.

3. Kartuschenfilter gemäß Anspruch 1 oder 2, wobei die Leitung (26) zwei erste, im Wesentlichen koplanare Bereiche (28), die sich zueinander von den korrespondierenden Ausflussöffnungen (15) erstrecken, einen zweiten Bereich (29), der parallel zu den ersten Bereichen ist, aber von ihnen in die Querrichtung beabstandet ist, und korrespondierende geneigte Verbindungsbereiche (30) zwischen den ersten Bereichen (28) und den zweiten Bereichen (29) aufweist, wobei die Verbindungsbereiche (30) zueinander in die Richtung weg von den ersten Bereichen (28) konvergieren.

4. Kartuschenfilter gemäß Anspruch 3, wobei die Basis (16) des Deckels (20) eine mittlere Aussparung (31) aufweist, deren Wände eine Konfiguration aufweisen, die mit der der geneigten Bereiche (30) der Leitung (26) übereinstimmen.

5. Kartuschenfilter gemäß einem der vorhergehenden Ansprüche, wobei die Leitung (26) durch einen Hohlraum (25) in der Basis des Gehäuses (11) ausgebildet wird, das durch eine gegenüberliegende Wand (32) des Deckels (20) abgedichtet wird.

6. Kartuschenfilter gemäß Anspruch 5, wobei die Verengung (33) durch eine Verdickung der Wand des Hohlraums (25) und/oder des Deckels (20) ausgebildet wird.

7. Kartuschenfilter gemäß einem der vorhergehenden Ansprüche, wobei der Deckel (20) mit einer flüssigkeitsdichten Verbindung auf einer Seitenwand (19) des Gehäuses (11) im Bereich einer Seitenwand (23) des Deckels (20) beschränkt wird.

8. Kartuschenfilter gemäß Anspruch 7, wobei sich die Seitenwand (23) bis zu einem Zwischenniveau der Seitenwand (19) erstreckt.

9. Perkulationsfiltervorrichtung (10), die ein Separatorelement, das zum Ausbilden eines oberen Behälters (2) und eines unteren Behälters (3) in der Vorrichtung passend ist, und einen Kartuschenfilter (1) gemäß einem der Ansprüche 1 bis 8 aufweist, wobei das Separatorelement einen Sitz (5) für das entfernbare Gehäuse des Kartuschenfilters (1) aufweist, wobei das Abdichtungselement (14) der Kartusche entfernbar in einem korrespondierenden Sitz (50) in Eingriff ist, der im Separatorelement ausgebildet ist.

10. Filtervorrichtung (10) gemäß Anspruch 9 mit einem kannenförmigen Körper, in dem das Separatorelement entfernbar aufgenommen ist, um so den oberen Behälter (2) und den unteren Behälter (3) zu bilden.

## Revendications

1. Filtre à cartouche remplaçable (1) pour dispositifs à filtre de percolation (10), comprenant :
- un boîtier (11) contenant un lit filtrant, le boîtier (11) ayant une base (16) avec au moins deux ouvertures (15) pour l'écoulement du liquide filtré, formées dans des positions espacées dans la base (16), et le boîtier (11) comprenant un élément d'étanchéité (14) adéquat pour se mettre en prise dans un siège correspondant (50) du dispositif à filtre (10) ;
- un couvercle (20) adapté d'une manière étanche sur le boîtier (11) dans la zone de la base (16) de celui-ci, un passage de fluide (26) étant défini entre le couvercle (20) et le boîtier (11) et interconnectant les ouvertures d'écoulement (15),
- et dans lequel une ouverture de décharge (27) pour le liquide filtré par la cartouche (1) est formée dans le couvercle (20), dans une position intermédiaire du passage (26), entre les ouvertures d'écoulement (15), deux branches symétriques étant identifiées dans le passage (26), par rapport à l'ouverture de décharge (27), chacune desdites branches symétriques étant dirigée vers l'ouverture d'écoulement respective (15),
- **caractérisé en ce qu'**il comprend, dans chaque branche du passage (26), entre les ouvertures d'écoulement (15) et l'ouverture de décharge (27), un resserrement étalonné (33) pour réguler la vitesse de transit du liquide filtré à travers le lit filtrant en limitant le flux de liquide filtré dans le passage (26), et **en ce que** le couvercle (20) s'étend par-dessus le boîtier (11) aussi loin qu'une position en dessous de l'élément d'étanchéité (14).

2. Filtre à cartouche selon la revendication 1, comprenant un tube (38) étendant l'ouverture d'écoulement (27) dans une direction s'éloignant du boîtier (11).

3. Filtre à cartouche selon la revendication 1 ou 2, dans lequel le passage (26) comprend deux premières sections sensiblement coplanaires (28) s'étendant l'une vers l'autre à partir des ouvertures d'écoulement correspondantes (15), une seconde section (29) parallèle aux premières sections mais espacée d'elles dans la direction transversale, et des sections de liaison inclinées correspondantes (30) entre les premières sections (28) et la seconde section (29), les sections de liaison (30) convergeant l'une vers l'autre dans la direction s'éloignant des premières sections (28).

4. Filtre à cartouche selon la revendication 3, dans lequel la base (16) du couvercle (20) a un évidement central (31) dont les parois ont une configuration correspondant à celle des sections inclinées (30) du passage (26).

5. Filtre à cartouche selon l'une quelconque des revendications précédentes, dans lequel le passage (26) est formé par une cavité (25) dans la base du boîtier (11), scellée par une paroi opposée (32) du couvercle (20).

6. Filtre à cartouche selon la revendication 5, dans lequel le resserrement (33) est formé par un épaississement de la paroi de la cavité (25) et/ou du couvercle (20).

7. Filtre à cartouche selon l'une quelconque des revendications précédentes dans lequel le couvercle (20) est retenu, avec un raccordement étanche aux fluides, sur une paroi latérale (19) du boîtier (11), dans la zone d'une paroi latérale (21) du couvercle (20).

8. Filtre à cartouche selon la revendication 7 dans lequel la paroi latérale (23) s'étend aussi loin qu'un niveau intermédiaire de la paroi latérale (19).

9. Dispositif à filtre de percolation (10) comprenant un élément séparateur adéquat pour définir un récipient supérieur (2) et un récipient inférieur (3) dans le dispositif et un filtre à cartouche (1) selon l'une quelconque des revendications 1 à 8, l'élément séparateur comprenant une surface de contact (5) pour le logement amovible du filtre à cartouche (1), l'élément d'étanchéité (14) de la cartouche se mettant en prise de manière amovible dans une surface de contact correspondante (50) formée dans l'élément séparateur.

10. Dispositif à filtre (10) selon la revendication 9, comprenant un corps de type pichet à l'intérieur duquel l'élément séparateur est logé de manière amovible de façon à définir le récipient supérieur (2) et le récipient inférieur (3).
